# EUROPÄISCHE PATENTSCHRIFT

(11) **EP 1 612 112 B1**
(45) Veröffentlichungstag und Bekanntmachung des Hinweises auf die Patenterteilung: **31.01.2007**
(21) Anmeldenummer: 05019455.4
(22) Anmeldetag: 27.02.2004
(51) Int. Cl.: B60R 21/20

(54) **Gassackmodul für ein Kraftfahrzeuglenkrad mit schwingfähig gelagertem Gasgenerator**
Air bag module with yieldably mounted gas generator
Module de sac gonflable avec générateur de gaz oscillant

(30) Priorität: 21.03.2003 DE 20304551 U
(43) Veröffentlichungstag der Anmeldung: 04.01.2006
(62) Teilanmeldung aus: 04004548.6
(73) Patentinhaber: TRW Automotive Safety Systems GmbH, 63743 Aschaffenburg (DE)
(72) Erfinder: Lorenz, Christian, 63849 Leidersbach (DE); Helmstetter, Matthias, 63743 Aschaffenburg (DE)
(74) Vertreter: Strass, Jürgen

(56) Entgegenhaltungen:
- EP-A- 1 065 110
- DE-A- 10 002 480
- DE-A- 10 110 912
- DE-A- 19 840 998
- US-A- 5 730 459

## Beschreibung

Die Erfindung betrifft ein Gassackmodul nach dem Oberbegriff des Anspruchs 1.

Gassackmodule, bei denen zur Erhöhung des Komforts und der Fahrsicherheit der Gasgenerator als Schwingungstilger eingesetzt wird, um die über die starre Lenksäule auf das Lenkrad übertragenen Fahrzeugschwingungen zu dämpfen, sind z.B. aus der EP-A-1 026 050 bekannt. Darin wird ein Gassackmodul vorgeschlagen, bei dem ein parallel zur Lenkradachse ausgerichteter Montagezylinder aus elastischem Werkstoff mit seinen freien Rändern einerseits mit einem ringförmigen Montageblech und andererseits mit einem Montageflansch des Gasgenerators verbunden ist. Ein Rand des Montagezylinders kann für eine Abdichtung des Gassackinnenraums gegen die Umgebung benutzt werden, wenn er in Anlage mit einem Hilfsflansch kommt. Dadurch wird verhindert, daß Verunreinigungen in den Gassack eindringen und im Aktivierungsfall Füllgase aus dem Gassack austreten.

In der WO 00/15470 ist ein Gassackmodul für ein Kraftfahrzeuglenkrad gezeigt, bei dem ein elastisches Element, das an einem mit dem Gassackmodul fest verbundenen Bauteil befestigt ist, eine Dichtlippe aufweist. Nach Zündung des Gasgenerators legt sich die Dichtlippe an einen Flansch des Gasgenerators an, um den Gassackinnenraum abzudichten.

Ein Gassackmodul mit den Merkmalen des Oberbegriffs des Anspruchs 1 ist aus der EP 1 065 110 A1 bekannt. Eine Abdichtung wird dadurch erreicht, daß der Gasgenerator gegen eine an einem Zwischenboden gebildete Abstützfläche gedrückt wird, wobei zwischen Gasgenerator und Abstützfläche ein Dichtelement vorgesehen ist.

Mit der Erfindung soll mittels einer einfachen Konstruktion mit wenigen Bauteilen eine zuverlässige Abdichtung des Gassackinnenraums im Aktivierungsfall ermöglicht werden.

Bei einem Gassackmodul nach dem Oberbegriff des Anspruchs 1 wird dies erfindungsgemäß dadurch erreicht, daß die Abstützfläche am Generatorträger gebildet ist. Gemäß der Erfindung wird die durch den Gasdruck bedingte Auslenkung des schwingfähig gelagerten Gasgenerators zur Abdichtung des Gassackinnenraums ausgenutzt.

Als besonders vorteilhaft erweist sich eine Ausführungsform, bei der über den Umfang des Gasgenerators verteilt mehrere Segmente aus einem elastisch verformbaren Werkstoff vorgesehen sind, die direkt oder indirekt am Gasgenerator und am Generatorträger befestigt sind und durch die der Gasgenerator wenigstens teilweise im Gassackmodul gelagert ist. Die Lagerung über einzelne Segmente, die mehr Gestaltungsfreiheit im Gassackmoduldesign erlaubt, ist möglich, da nicht die Segmente, sondern der gegen die Abstützfläche gedrückte Gasgenerator selbst die Abdichtung des Gassackinnenraums übernimmt.

Weitere vorteilhafte Ausgestaltungen der bevorzugten Ausführungsformen der Erfindung sind in den Unteransprüchen angegeben.

Aus der nachfolgenden Beschreibung und aus den beigefügten Zeichnungen, auf die Bezug genommen wird, ergeben sich weitere Einzelheiten der Erfindung. In den Zeichnungen zeigen:
- Figur 1a einen Halbschnitt eines beispielhaften Gassackmoduls, das nicht Gegenstand der Erfindung ist, im nicht ausgelösten Zustand;
- Figur 1b einen Halbschnitt des Gassackmoduls gemäß Figur 1 im ausgelösten Zustand;
- Figur 2 einen Halbschnitt eines erfindungsgemäßen Gassackmoduls nach einer ersten Ausführungsform im nicht ausgelösten Zustand;
- Figur 3 einen Halbschnitt eines erfindungsgemäßen Gassackmoduls nach einer zweiten Ausführungsform im nicht ausgelösten Zustand;
- Figur 4a einen Halbschnitt eines erfindungsgemäßen Gassackmoduls nach einer dritten Ausführungsform im nicht ausgelösten Zustand;
- Figur 4b eine Vergrößerung des Ausschnitts X aus Figur 4a; und
- Figur 5 einen Ausschnitt eines erfindungsgemäßen Gassackmoduls nach einer vierten Ausführungsform in teilweise geschnittener Ansicht.

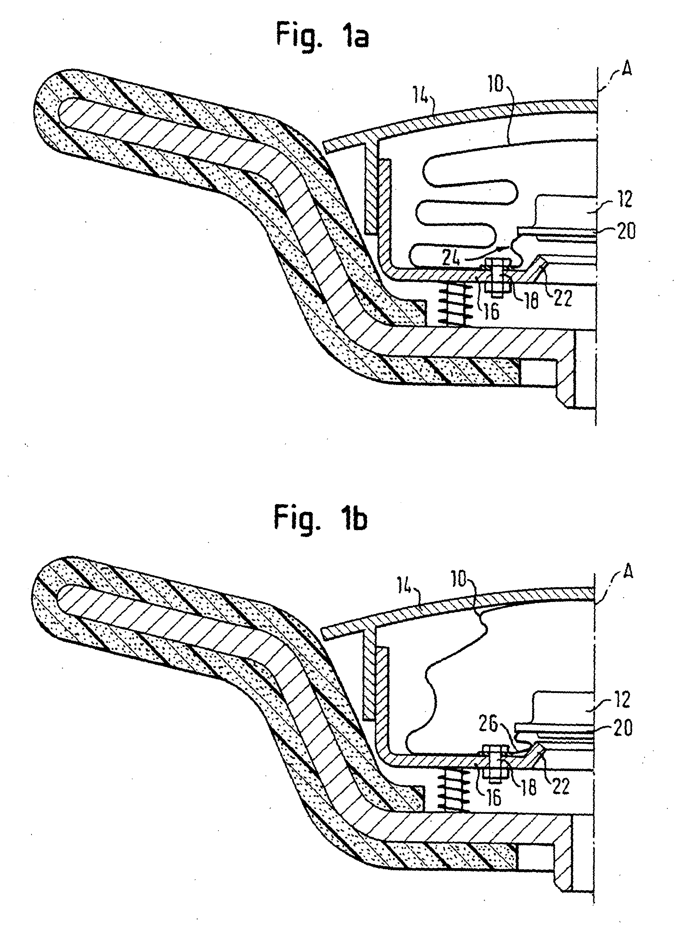

Das in Figur 1a beispielhaft dargestellte Gassackmodul umfaßt einen Gassack 10, einen Gasgenerator 12, eine Abdeckkappe 14, einen Generatorträger 16 sowie eine Schraubverbindung 18, mittels der der die Eintrittsöffnung umgebende Rand des Gassacks 10 mit dem Generatorträger 16 verspannt ist. Der Gasgenerator 12 ist relativ zu den übrigen Bauteilen des Gassackmoduls schwingfähig gelagert und kann somit zur Dämpfung unerwünschter Vibrationen benutzt werden.

Der Gasgenerator 12 hat einen bezogen auf die Mittelachse A des Gassackmoduls umlaufenden Montageflansch 20, dem ein schräg abgewinkelter, umlaufender Abschnitt 22 des Generatorträgers 16 gegenüberliegt. Ein zylinderartiges Dichtelement 24 aus einem elastischen Werkstoff ist mit seinen freien Rändern einerseits mit dem Montageflansch 20 des Gasgenerators 12 und andererseits über die Schraubverbindung 18 mit dem Generatorträger 16 fest verbunden. Mit dem umlaufenden Dichtelement 24 wird eine Abdichtung des Gassackinnenraums erreicht, insbesondere zwischen dem abgewinkelten Abschnitt 22 des Generatorträgers 16 und dem Montageflansch 20 des Gasgenerators 12. Das Dichtelement 24 ist zwischen seinen freien Rändern in axialer Richtung "gestaucht", so daß es eine im Querschnitt wellenartige Kontur aufweist. Dem Gasgenerator 12, der teilweise durch das Dichtelement 24 gelagert ist, bleibt dadurch genügend Spiel, so daß seine Funktion als Schwingungstilger nicht beeinflußt ist.

Im Aktivierungsfall, der in Figur 1b dargestellt ist, tritt Gas aus dem Gasgenerator 12 aus, um den Gassack 10 zu füllen. Durch den dabei entstehenden Druck im Gassackinnenraum wird ein mittlerer Abschnitt 26 des Dichtelements 24 an den abgewinkelten Abschnitt 22 des Generatorträgers 16 gepreßt. Der abgewinkelte Abschnitt 22 nimmt einen Großteil des Drucks auf und entlastet somit das Dichtelement 24.

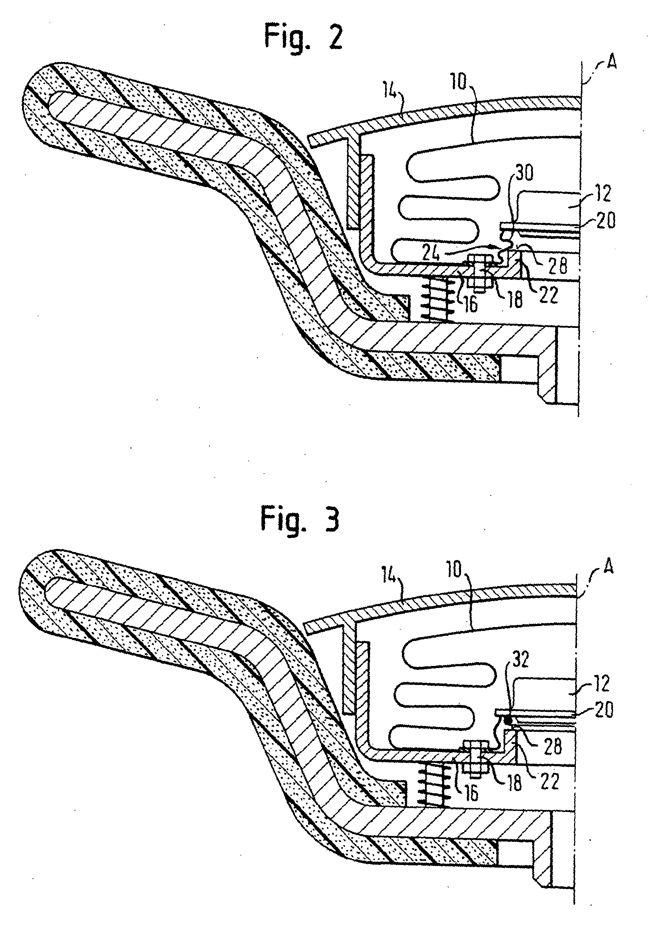

Bei der in Figur 2 gezeigten erfindungsgemäßen Ausführungsform eines Gassackmoduls sind die Bauteile, die denen der Figuren 1a und 1b entsprechen, mit den gleichen Bezugszeichen versehen. Im Unterschied zum zuvor beschriebenen Gassackmodul erstreckt sich bei der erfindungsgemäßen Ausführungsform der Figur 2 der abgewinkelte Abschnitt 22 des Gasgeneratorträgers 16 nicht schräg, sondern rechtwinklig vom Generatorträger 16 weg, und das dem Gasgenerator 12 zugewandte Ende des Abschnitts 22 bildet eine Abstützfläche 28. Das Dichtelement 24 ist so angeordnet, daß ein Wellenabschnitt 30 zwischen der Abstützfläche 28 und dem Montageflansch 20 des Gasgenerators 12 liegt.

Im Aktivierungsfall werden der Gasgenerator 12 und der Wellenabschnitt 30 durch den Druck im Gassackinneren nach unten bzw. zur Mittelachse A gedrückt, so daß der Wellenabschnitt 30 zwischen dem Montageflansch 20 und der Abschnittsfläche 28 zusammengedrückt wird und einen doppellagigen Dichtabschnitt bildet. Die Dichtwirkung und die Stabilität des Dichtelements 24 werden dadurch verstärkt. Das Dichtelement 24 kann auch so ausgebildet und angeordnet sein, daß erst durch den sich im Aktivierungsfall aufbauenden Druck ein Wellenabschnitt 30 des Dichtelements 24 zwischen Abstützfläche 28 und Montageflansch 20 gedrückt wird.

Die in Figur 3 dargestellte Ausführungsform unterscheidet sich von der Ausführungsform der Figur 2 dadurch, daß auf der der Abstützfläche 28 gegenüberliegenden Seite des Montageflanschs 20 ein weiteres Dichtelement 32 in Form eines umlaufenden Dichtrings angebracht ist, mit dem der Montageflansch 20 des Gasgenerators 12 im Aktivierungsfall direkt auf der Abstützfläche 28 zu liegen kommt, ohne daß ein Wellenabschnitt des Dichtelements 24 dazwischengeschoben wird. Das zusätzliche Dichtelement 32 sorgt für die primäre Abdichtung des Gassackinnenraums. Bei dieser Ausführungsform muß daher das Dichtelement 24 nicht umlaufend ausgebildet sein. Es können vielmehr auch einzelne, am Montageflansch 20 des Gasgenerators 12 und mittels Schraubverbindungen 18 am Generatorträger 16 befestigte Segmente zur Lagerung des Gasgenerators 12 vorgesehen sein, wenn eine ausreichende Dichtwirkung gänzlich durch den Dichtring 32 gewährleistet ist. Das zusätzliche Dichtelement 32 kann selbstverständlich auch auf der Abschnittsfläche 28 angebracht sein.

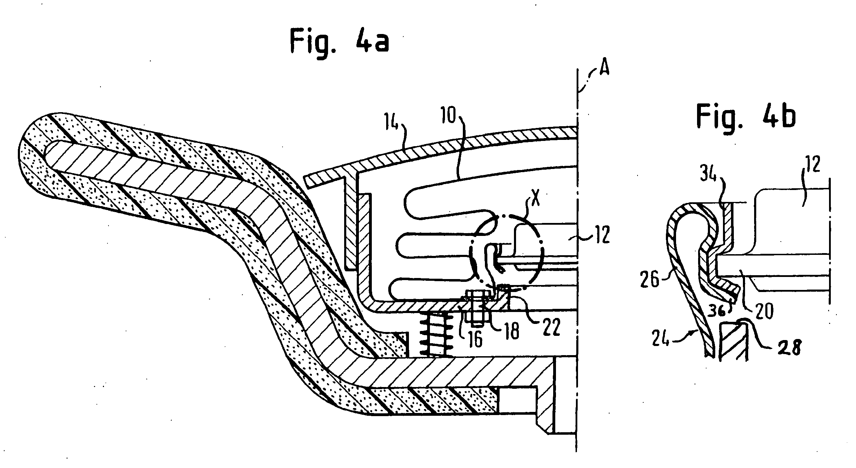

Bei der in Figur 4a gezeigten Ausführungsform erfolgt die Befestigung des oberen Rands des Dichtelements 24 über ein am Montageflansch 20 angebrachtes Verbundelement 34, wie aus Figur 4b deutlicher hervorgeht. Das Dichtelement 24 ist so angeordnet, daß der am Verbundelement 34 befestigte Randabschnitt einmal so umgelegt ist, daß er mit der Seite am Verbundelement 34 anliegt, die im Auslösefall mit Druck beaufschlagt wird. Somit liegt im Bereich des Montageflanschs 20 ein mittlerer Abschnitt 26 des Dichtelements 24 vor, der im Aktivierungsfall durch den Druck im Gassackinneren an den am Verbundelement 34 befestigten Randabschnitt gedrückt wird und dadurch die Dichtwirkung des Dichtelements 24 verbessert. Der mittlere Abschnitt 26 und der Randabschnitt des Dichtelements 24 stützen sich dabei am Verbundelement 34 ab, das dadurch für eine Entlastung des Dichtelements 24 sorgt. Außerdem wird der Gasgenerator 12 durch den erzeugten Druck nach unten bewegt, so daß ein Endabschnitt 36 des Dichtelements 24 auf einer am Generatorträger 16 gebildeten Abstützfläche 28 zu liegen kommt und so für eine umlaufende Abdichtung sorgt.

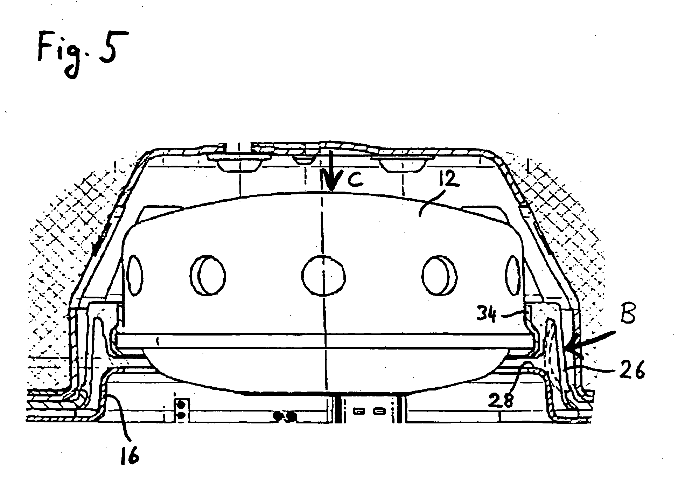

Die in Figur 5 gezeigte Ausführungsform entspricht bis auf einige kleine Unterschiede in der Ausgestaltung einzelner Bauteile im wesentlichen der zuvor beschriebenen Ausführungsform. Aus der Figur geht deutlich hervor, daß der im Auslösefall vom Gasgenerator 12 erzeugte Druck sowohl in seitlicher Richtung, angedeutet durch den Pfeil B, als auch in Richtung des Pfeils C wirkt. Wie durch die gestrichelten Linien angedeutet, sorgt einerseits der seitliche Druck dafür, daß der mittlere Abschnitt 26 des umlaufenden Dichtelements 24 in Anlage sowohl mit dem umgelegten Randabschnitt des Dichtelements 24 als auch mit einem Oberflächenabschnitt des Generatorträgers 16 kommt, während andererseits sich der Gasgenerator 12 aufgrund des Drucks in Richtung des Pfeils C bewegt, so daß der Endabschnitt 36 des Dichtelements 24 auf der Abstützfläche 28 des Generatorträgers 16 zu liegen kommt.

Die verschiedenen, anhand der einzelnen Ausführungsformen beschriebenen Maßnahmen zur Verbesserung der Abdichtung des Gassackinnenraums können selbstverständlich auch untereinander kombiniert werden.

## Patentansprüche

1. Gassackmodul für ein Kraftfahrzeuglenkrad, mit einem Gassack (10), einem schwingfähig gelagerten Gasgenerator (12), einem Gasgenerator (16) sowie Mitteln (18) zum Verspannen des Gassacks (10) am Generatorträger (16), wobei der Gasgenerator (12) durch den beim Befüllen des Gassacks (10) im Gassackinneren entstehenden Druck so ausgelenkt wird, daß er gegen eine Abstützfläche (22; 28) gedrückt wird, wobei zwischen Gasgenerator (12) und Abstützfläche (22; 28) ein Dichtelement (24; 32) vorgesehen ist, **dadurch gekennzeichnet, daß** die Abstützfläche (22; 28) am Generatorträger (16) gebildet ist.

2. Gassackmodul nach Anspruch 1, **dadurch gekennzeichnet, daß** ein umlaufender Montageflansch (20) des Gasgenerators (12) auf die Abstützfläche (22; 28) gedrückt wird.

3. Gassackmodul nach Anspruch 1 oder 2, **dadurch gekennzeichnet, daß** das Dichtelement (32) auf einer Seite des Montageflansches (20) befestigt ist.

4. Gassackmodul nach Anspruch 1 oder 2, **dadurch gekennzeichnet, daß** das Dichtelement (32) auf der Abstützfläche (28) befestigt ist.

5. Gassackmodul nach einem der vorhergehenden Ansprüche, **dadurch gekennzeichnet, daß** das Dichtelement (32) ein umlaufendes Dichtelement, insbesondere ein Dichtring ist.

6. Gassackmodul nach einem der vorhergehenden Ansprüche, **dadurch gekennzeichnet, daß** über den Umfang des Gasgenerators (12) verteilt mehrere Segmente (24) aus einem elastisch verformbaren Werkstoff vorgesehen sind, die direkt oder indirekt am Gasgenerator (12) und am Generatorträger (16) befestigt sind und durch die der Gasgenerator (12) wenigstens teilweise im Gassackmodul gelagert ist.

## Claims

1. A gas bag module for a motor vehicle steering wheel, comprising a gas bag (10), a gas generator (12) mounted so as to be capable of oscillating, a generator carrier (16), and means (18) for bracing the gas bag (10) on the generator carrier (16), the gas generator (12) being deflected by the pressure developing in the interior of the gas bag (10) during filling of the gas bag such that it is pressed against a support surface (22; 28), a sealing element (24; 32) being provided between the gas generator (12) and the support surface (22; 28), **characterized in that** the support surface (22; 28) is formed on the generator carrier (16).

2. The gas bag module according to Claim 1, **characterized in that** an encircling mounting flange (20) of the gas generator (12) is pressed onto the support surface (22; 28).

3. The gas bag module according to Claim 1 or 2, **characterized in that** the sealing element (32) is fastened on one side of the mounting flange (20).

4. The gas bag module according to Claim 1 or 2, **characterized in that** the sealing element (32) is fastened on the support surface (28).

5. The gas bag module according to any of the preceding claims, **characterized in that** the sealing element (32) is an encircling sealing element, in particular a sealing ring.

6. The gas bag module according to any of the preceding claims, **characterized in that** several segments (24) of an elastically deformable material are provided, distributed over the periphery of the gas generator (12), which are fastened directly or indirectly to the gas generator (12) and to the generator carrier (16) and by which the gas generator (12) is at least partially supported in the gas bag module.

## Revendications

1. Module de coussin à gaz pour un volant de direction de véhicule, comportant un coussin à gaz (10), un générateur de gaz (12) monté de manière à pouvoir osciller, un support de générateur de gaz (16), ainsi que des moyens (18) pour tendre le coussin à gaz (10) sur le support de générateur de gaz (16), le générateur de gaz (12) étant dévié par la pression se produisant à l'intérieur du coussin à gaz lors du remplissage du coussin à gaz (10), de telle sorte qu'il est pressé contre une surface d'appui (22 ; 28), un élément d'étanchéité (24 ; 32) étant prévu entre le générateur de gaz (12) et la surface d'appui (22 ; 28), **caractérisé en ce que** la surface d'appui (22 ; 28) est formée sur le support de générateur de gaz (16).

2. Module de coussin à gaz selon la revendication 1, **caractérisé en ce qu'**une bride de montage (20) périphérique du générateur de gaz (12) est pressée sur la surface d'appui (22 ; 28).

3. Module de coussin à gaz selon la revendication 1 ou 2, **caractérisé en ce que** l'élément d'étanchéité (32) est fixé sur un côté de la bride de montage (20).

4. Module de coussin à gaz selon la revendication 1 ou 2, **caractérisé en ce que** l'élément d'étanchéité (32) est fixé sur la surface d'appui (22 ; 28).

5. Module de coussin à gaz selon l'une des revendications précédentes, **caractérisé en ce que** l'élément d'étanchéité (32) est un élément d'étanchéité périphérique, en particulier une bague d'étanchéité.

6. Module de coussin à gaz selon l'une des revendications précédentes, **caractérisé en ce que** plusieurs segments (24) en matériau élastique déformable sont prévus de manière répartie sur la périphérie du générateur de gaz (12), lesquels sont fixés directement ou indirectement sur le générateur de gaz (12) et sur le support de générateur de gaz (16) et par lesquels le générateur de gaz (12) est monté au moins partiellement dans le module de coussin à gaz.
